# FASCICULE DE BREVET EUROPEEN

(11) **EP 4 146 718 B1**
(45) Date de publication et mention de la délivrance du brevet: **01.05.2024**
(21) Numéro de dépôt: 21722890.7
(22) Date de dépôt: 04.05.2021
(51) Int. Cl.: C08G 18/38, C08G 18/30, C08G 18/10, C08G 18/76, C08G 18/18, C04B 28/26, C09K 17/46, E21D 20/02, C04B 111/00

(54) **COMPOSITION BICOMPOSANTE POUR LA FORMATION D'UN MATERIAU ORGANO-MINERAL INJECTABLE OU POMPABLE, PROCEDES DE SCELLEMENT ET UTILISATIONS ASSOCIES**
ZWEIKOMPONENTIGE ZUSAMMENSETZUNG ZUR HERSTELLUNG EINES INJIZIERBAREN ODER PUMPBAREN ORGANOMINERALMATERIALS UND ZUGEHÖRIGE ABDICHTUNGSVERFAHREN UND VERWENDUNGEN
TWO-COMPONENT COMPOSITION FOR FORMING AN INJECTABLE OR PUMPABLE ORGANO-MINERAL MATERIAL, AND ASSOCIATED SEALING METHODS AND USES

(30) Priorité: 07.05.2020 FR 2004522
(43) Date de publication de la demande: 15.03.2023
(73) Titulaire: Weber Mining & Tunnelling, 57520 Rouhling (FR)
(72) Inventeur: KOELLSCH, Didier, 57730 FOLSCHVILLER (FR); WEBER, Frank, 8118 BRIDEL (LU)
(74) Mandataire: Cabinet Nuss
(86) Numéro de dépôt international: PCT/EP2021/061648
(87) Numéro de publication internationale: WO 2021/224218

(56) Documents cités:
- WO-A1-93/21249

## Description

La présente invention concerne le domaine minier, des travaux publics et analogues et plus particulièrement celui du scellement par injection de boulons d'ancrage ou de structures de consolidation similaires.

Pour sceller des boulons d'ancrage à des fins de consolidation de terrain, notamment dans des exploitations souterraines, il est connu d'utiliser des compositions bicomposantes pompées in situ par une pompe d'injection qui, lors de leur mélange, donnent lieu à une ou des réactions chimiques qui durcissent le mélange et assurent le scellement dudit boulon d'ancrage dans le terrain. Une catégorie de compositions bien connue est celle employant des groupements réactifs isocyanates dans l'une de leurs composantes.

Des systèmes à base d'isocyanate et de silicate de métal alcalin à deux composantes sont bien connus. Le document US 3 607 794 (Conteki) décrit, par exemple, la formation de tels systèmes basés sur la réaction chimique de groupes isocyanates avec des solutions aqueuses de silicates de métaux alcalins. Cela implique une réaction complexe.

Des systèmes à base d'isocyanate et de silicate de métal alcalin à deux composantes faisant varier la quantité de silicate de métal alcalin, de polyol et d'isocyanate sont également bien connus (cf. par exemple, EP 0 016 262 B2 ou EP 0 167 003 A1). Des systèmes à base de silicate de métal alcalin et de ciment existent. Le document EP 0 005 988 A1 décrit, par exemple, de tels systèmes. Des systèmes à base de silicate de métal alcalin, de ciment et d'isocyanate existent. Le document WO 93/21249 décrit, par exemple, de tels systèmes. Toutefois, ces systèmes ne combinent pas les propriétés mécaniques nécessaires à certaines applications exigeantes où des modules de cisaillement et d'élasticité élevés, une bonne résistance à la compression et des produits non friables sont nécessaires pour des temps de polymérisation allant de 20 secondes à 15 minutes.

Des systèmes de scellement à base de cartouches contenant des résines polyuréthane ou polyester sont également bien connus. Le document US 3 882 684 décrit, par exemple, un tel système. Ces systèmes de scellement sous forme de cartouches à base de résines polyester insaturées et de charges (sable, carbonate de calcium...) sont largement utilisés dans le monde minier et pour les tunnels. Toutefois, leur mise en oeuvre est compliquée, longue, fastidieuse et difficilement mécanisable et/ou automatisable, ce qui constitue un handicap majeur.

En effet, l'apparition d'équipements de chantier ou miniers permettant un boulonnage mécanisé et/ou automatisé (comme par exemple le Boltec boiter développé par la société Epiroc) a créé de nouveaux besoins en solutions pompables ou injectables de type bicomposantes mais dont les caractéristiques physiques ou mécaniques finales (résistance mécanique en flexion, contrainte en cisaillement, en compression, module d'élasticité...) soient aussi bonnes voire meilleures que celles des ancrages obtenus avec la technologie des cartouches de résines polyester.

Une solution améliorée à base notamment de groupements isocyanates réactifs et de silicate a donc été recherchée.

Selon la présente invention, il est fourni une composition bicomposante constituée d'une composante A destinée à être mélangée, in situ, avec une composante B en vue de former un composé ou matériau organo-minéral injectable ou pompable, notamment pour le scellement de boulons d'ancrage dynamiques par injection, la composante A comprenant essentiellement au moins un silicate de métal alcalin et la composante B comprenant essentiellement au moins un prépolymère de polyisocyanate et au moins un ciment, caractérisé en ce que la composante A contient en outre au moins un polyol de masse moléculaire comprise entre 50 et 200 g/mol, au moins un catalyseur de polymérisation comprenant au moins une fonction alcool ou amine primaire et au moins un agent gélifiant rendant le mélange final des deux composantes A et B sous la forme d'un gel sans provoquer la prise du mélange desdites composantes, et en ce que la composante B comprend en outre au moins un plastifiant compatible, le mélange final desdites composantes A et B conduisant à la formation d'un matériau organo-minéral présentant une résistance à la compression à 10 % de déformation d'au moins 17 MPa, selon la norme ISO 604 et une résistance au cisaillement d'au moins 7 MPa, selon la norme AFTM D732, pour des temps de prise compris entre 20 secondes et 15 minutes à 20°C.

Avantageusement, le silicate de métal alcalin est un silicate de sodium, un silicate de potassium ou un silicate de lithium ou un mélange de ceux-ci.

De préférence, le silicate de métal alcalin est un silicate de sodium liquide de rapport molaire SiO₂/Na₂O de 1,6 à 3,5 tel qu'on obtient Na₂O.xSiO₂ + H₂O (x=1,6-3,5) et de préférence 1,8 à 2,8.

Les silicates aqueux de métaux alcalins utilisés peuvent être représentés par MO.SiO, où M représente un atome d'un métal alcalin et ils diffèrent par le rapport MO/SiO. Parmi les silicates aqueux de métaux alcalins, les silicates de sodium disponibles dans le commerce se sont révélés donner des résultats satisfaisants. Bien que d'autres silicates de métaux alcalins puissent être utilisés, par exemple les silicates de potassium et de lithium, ils sont moins préférables pour des raisons économiques.

L'utilisation d'un ou de plusieurs prépolymères de polyisocyanate permet d'améliorer en partie les caractéristiques mécaniques, notamment les performances en ce qui concerne le cisaillement et la friabilité.

En outre, le ou les prépolymères de polyisocyanate sont avantageusement choisi dans le groupe formé par : les prépolymères à base de diphénylméthanediisocyanate (MDI), le diphénylméthane-4,4'-diisocyanate et le MDI polymérique.

Le polyisocyanate utilisé peut être un diisocyanate aliphatique, cyclo aliphatique, araliphatique, aromatique ou hétérocyclique, un polyisocyanate polymérique (mélange d'isomères) ou obtenu à partir d'un résidu de distillation avec des groupes isocyanates.

Les poly/diisocyanates appropriés qui sont utilisés dans le procédé de l'invention incluent des diisocyanates organiques qui sont des composés de formule générale : O = C = NRN = C = O où R est un radical organique divalent tel qu'un radical alkylène, aralkylène ou arylène. De tels radicaux appropriés peuvent contenir, par exemple, 2 à 4 atomes de carbone.

On entend par MDI polymérique (également appelé MDI de polymérisation) un mélange de différents monomères de MDI (le plus souvent constitué principalement de diphénylméthane-4,4'-diisocyanate et d'une petite quantité de diphénylméthane-2,4'-diisocyanate).

Selon une autre caractéristique, le ou les prépolymères de polyisocyanate utilisés possèderont une teneur totale en groupements isocyanates (NCO) comprise entre 22 et 32% et de préférence entre 25 et 28%. Ils peuvent être utilisé seuls ou en mélange avec au moins un «polyisocyanate non prépolymérisé» c'est-à-dire au moins une simple molécule de polyisocyanate, par ex. du diphénylméthane-4,4'-diisocyanate présentant plusieurs groupements isocyanates n'ayant pas subi de réaction au préalable avec au moins un produit réactif avec les groupements isocyanates (glycols, polyols, amines...).

Dans certains modes de réalisation, le prépolymère de poly/diisocyanate pourra être obtenu en modifiant le type et la quantité de produits réactifs (tels que des glycols, polyols, amines...) utilisés seuls ou en mélange avec l'isocyanate ou les isocyanates permettant de modifier certaines propriétés physico-chimiques de celui-ci (telles que par exemple, la viscosité, l'élasticité, la contrainte au cisaillement, la résistance mécanique en compression, la résistance mécanique en flexion...).

Par souci de commodité dans la description, seuls «les diisocyanates», «MDI» ou «prépolymères de MDI» seront mentionnés dans la suite.

Avantageusement, le ciment ou le mélange de ciments utilisé est à base de : un Ciment Portland Artificiel (CEM I), Ciment Portland Composé (CEM II), Ciment de Haut-Fourneau (CEM III), Ciment Pouzzolanique (CEM IV), Ciment Composé (CEM V), un ciment de classe de résistance 32,5 ou 42,5 ou 52,5, un ciment prompt, un ciment prompt naturel (CNP) NF P 15-314 ou un ciment alumineux fondu (CA) NF P 15-315, ou encore de micro-ciments.

Un ciment prompt naturel (CNP) NF P 15-314 pourra être également utilisé, bien que ce dernier puisse montrer certains problèmes de compatibilité avec l'isocyanate, comme par exemple un épaississement anormal ou encore contenir des granulats abrasifs pour le système de pompage.

Dans le cadre de certaines réalisation, des micro-ciments présentant des plages de granulométrie plus resserrées sont susceptibles d'être utilisés, seuls ou mélangés ou encore en association avec d'autres ciments. Ces micro-ciments correspondent, par exemple, à des liants de type fins ou ultra-fins, à base de laitier de haut fourneaux tels que ceux proposés par la société EQUIOM, référencés SPINOR A12, A16, A20, A32 et A48, et dont les granulométries respectives sont comprises entre 6 et 48 µm.

Dans certains modes de réalisation, il pourra être utilisé un ciment seul ou un mélange de plusieurs ciments pour améliorer certaines propriétés du produit (propriétés mécaniques, viscosité, thixotropie, temps de prise...) ou pour des raisons économiques.

On utilisera pour améliorer la résistance au cisaillement, ajuster la viscosité et rendre le produit (matériau final) moins friable, des plastifiants utilisés seuls ou en mélange. On choisira des plastifiants non aqueux, ne contenant pas de groupements réactifs (hydroxyle, amine primaire ou secondaire, acide...) pour le groupement isocyanate tels que par exemple l'adipate de dioctyle, l'adipate de bis(2-(2-butoxyéthoxy)éthyle, l'acétate de 2-(2-butoxyéthoxy)éthyle (ABDG : acétate de diglycol de butyle), les esters de colza... Les plastifiants utilisés seuls ou en mélange seront de préférence choisis parmi les plastifiants à chaînes linéaires ayant une masse molaire supérieure à 100 g/mol et un point éclair (flash point) supérieur à 100 °C. Les plastifiants selon leurs tailles moléculaires et leurs viscosités pourront également avoir un rôle de fluidifiant permettant d'ajuster la viscosité de la composante B en fonction de la viscosité du ou des prépolymères de MDI et du taux de poudres présent dans ladite composante.

En outre, dans la composante A, l'utilisation de glycols ou polyols de petite taille moléculaire est nécessaire pour fluidifier, ajuster la viscosité et améliorer la miscibilité des additifs tels que par exemple les catalyseurs de réaction, les réactifs gélifiants ou thixotropes, les promoteurs d'adhésion... Pour permettre une bonne miscibilité avec les silicates de métal alcalin, ces composés auront une masse moléculaire comprise entre 50 et 200 g/mol et de préférence entre 50 et 100 g/mol, comme par exemple le diéthylèneglycol, le monoéthylèneglycol, la glycérine... Pour des raisons de sécurité, on évitera tous les alcools avec des point éclair (flash point) trop bas (<100°C). La quantité utile de ces composés dépendra de la quantité d'additifs à rendre miscible ainsi que de la viscosité recherchée.

Pour des raisons de stabilité et de sensibilité des prépolymères d'isocyanate, les catalyseurs de réaction seront uniquement incorporés dans la composante A. Ces catalyseurs pourront être choisis parmi les catalyseurs de réaction utilisés dans le polyuréthane tel que par exemple : les amines tertiaires 2-(2-diméthylaminoéthoxy)éthanol, les trialkylamines, par exemple les triéthyles, tripropyles, triarylamines tributyriques, les dialkylalcanolamines et les alkyl dialkanolamines, telles que les N,N-dialkyléthanolamines, telles que les triéthanolamines, la pyrimidine, la quinoléine, la diméthylaniline, les Nalkylmorpholines, la N,N-diméthylcyclohexylamine, la N,N-diméthyl benzylamine et la triéthylène diamine...), des sels métalliques (dilaurate de dibutylétain,octoate de plomb, acétate de potassium....)...

De préférence, pour des raisons de miscibilité avec les silicates de métal alcalin, on utilisera des catalyseurs de réaction, tels que des amines tertiaires, en particulier les amines tertiaires comprenant au moins une fonction polaire tel qu'une fonction alcool ou une fonction amine primaire, tel que par exemple le 2,2-diméthylaminoéthoxy)éthanol, la N,N-diméthyléthanolamine ou Nméthyldiéthanolamine.

Pour favoriser la formation d'un gel dit «thixotrope» sans provoquer la prise immédiate et définitive du composé final, on utilisera un agent gélifiant, de préférence des amines primaires ou secondaires comme par exemple : la diéthanolamine, la 3-aminométhyl-3,5,5-triméthylcyclohexylamine, le chlorhydrate de guanidine, ou certains amino-silanes formant un gel lors de la réaction avec les isocyanates, comme par exemple le triméthoxysilylpropyldiéthylènetriamine.

Le gel ainsi formé, empêche le mélange de la composante A et B de s'écouler librement hors du trou d'injection avant sa prise et permet le bon remplissage de la cavité ainsi que, dans certains cas, l'introduction du boulon d'ancrage ou du câble avant la prise.

De la même façon, un certain pourcentage d'eau pourra être ajouté, de façon à ajuster la viscosité et à améliorer la miscibilité des additifs en faisant attention à ne pas dégrader les propriétés mécaniques indispensables à l'utilisation.

Il est également possible d'ajouter des agents d'adhésion (ou promoteurs d'adhésion) à l'une ou l'autre des composantes, tels que des silanes organofonctionels, typiquement utilisés comme promoteurs d'adhérence sur une grande variété de supports tels que le béton, les pierres naturelles, les métaux, les plastiques, les textiles et le bois. Ils sont aussi très efficaces pour améliorer la compatibilité entre les charges minérales et les polymères organiques. Le choix de l'agent d'adhésion se fera en fonction de sa compatibilité avec ladite composante. Par exemple, pour la composante A, on pourra utiliser, le DYNASYLAN 1411 (N-(2-aminoéthyl)-3-aminopropylméthyldiméthoxysilane).

De façon générale, la composante B pourra également contenir différents additifs nécessaires à l'introduction et au maintien en suspension de poudres comme des agents débulants, des agents anti-sédimentation, des agents rhéologiques dit thixotropes (comme par exemple le LUVOTHIX, dérivé d'huile de ricin inorganiquement modifiée, commercialisé par la société Lehvoss, ou encore, les silices pyrogénées hydrophobes, comme par exemple AEROSIL R202 commercialisées par Evonik) ainsi que des additifs susceptibles de piéger l'humidité relative pour éviter la réaction avec les isocyanates, par exemple des tamis moléculaires comme le SYLOSIV, commercialisé par la société Grâce.

La composante B pourra également contenir des ignifugeants liquides tels que, par exemple, le tris(1,3-dichloro-2-propyl)phosphate (TCPP) ou le triéthyl phosphate (TEP), servant à améliorer les propriétés dites «feu» du composé et pouvant également avoir un rôle de fluidifiant sur le mélange.

La composante B pourra également contenir des ignifugeants solides, en poudre, tels que par exemple les trihydrates d'aluminium.

Des charges solides peuvent être ajoutées à la composante B pour améliorer certaines propriétés mécaniques ou rhéologiques, ou pour des raisons purement économiques. Les charges utilisées seront de préférence non abrasives et exemptes de toute humidité et non réactives (comme par exemple des kaolins), avec les isocyanates et le ciment.

Dans les modes de réalisation préférés, la composante A est constituée principalement de :
- 50 à 98 % en poids, de préférence 65 à 95 % en poids d'au moins un silicate de métal alcalin liquide, c'est-à-dire en solution ;
- 1 à 40 % en poids, de préférence 5 à 30 % en poids d'au moins un polyol de masse moléculaire comprise entre 50 et 200 g/mol ;
- 0,01 à 5 % en poids, de préférence 0,025 à 2 % en poids d'au moins un catalyseur de polymérisation ;
- 0,01 à 5 % en poids, de préférence, 0,1 à 1 % en poids d'au moins un agent gélifiant;
- 0 à 10 % en poids d'eau, de préférence 1 à 5 % en poids d'eau, et
- 0 à 5 % en poids, de préférence 1 à 3 % en poids d'au moins un promoteur d'adhérence compatible avec le ou les silicates de métal alcalin, les glycols et les autres additifs, la somme des constituants de la composante A étant de 100 % et où la composante B est constituée principalement de :
   - 40 à 80 % en poids, de préférence 50 à 70 % en poids d'au moins un prépolymère d'isocyanate ;
   - 1 à 20 % en poids, de préférence 5 à 10 % en poids d'au moins un plastifiant ;
   - 5 à 50 % en poids, de préférence 15 à 35 % en poids d'au moins un ciment ;
   - 0 à 10 % en poids, de préférence 1 à 5 % en poids d'au moins un agent rhéologique évitant la sédimentation des poudres ;
   - 0 à 10% en poids, de préférence 1 à 5 % en poids d'au moins un additif pour piéger l'humidité ;
   - 0 à 20 % en poids, de préférence 1 à 5 % en poids d'au moins un agent de charge non réactif avec les groupements isocyanates ;
   - 0 à 20 % en poids, de préférence 5 à 10 % en poids d'au moins un ignifugeant pour le matériau formé, et ;
   - 0 à 5 % en poids, de préférence 1 à 3 % en poids d'au moins un promoteur d'adhérence compatible avec les isocyanates, le ciment et les autres additifs, la somme des constituants de la composante B étant de 100 %.

Le terme "consiste essentiellement en" signifie que tous les composants supplémentaires sont présents en une quantité qui n'affecte pas de manière significative la résistance au cisaillement, la résistance en compression, la résistance en flexion et les propriétés adhésives de la composition.

Dans la composition selon l'invention, la quantité en poids de chacun des composants est un pourcentage en poids (masse) de la composition.

Dans un mode de réalisation préféré, le ciment est introduit dans le prépolymère de MDI et constitue un système bi-composante dont la deuxième composante est la solution de silicate de métal alcalin.

Avantageusement, le ratio volumétrique A/B entre la composante A et la composante B est inférieur à 1 et de préférence compris entre 1/2 et 2/3.

L'invention a encore pour objet un procédé de mise en oeuvre d'une composition selon l'invention, caractérisé en ce qu'on injecte les composantes A et B à l'aide de pompes volumétriques ou d'un équipement similaire permettant l'injection en respectant le ratio volumétrique entre les différentes composantes dans le trou d'ancrage par l'intermédiaire d'une canne d'injection ou directement par un boulon d'ancrage auto-foreur ou non. Le mélange des deux composantes se fait directement pendant l'injection à l'aide d'un mélangeur statique ou dynamique.

Avantageusement, dans le cas du boulon d'ancrage creux faisant office de canne d'injection, celui-ci comporte une entrée et une sortie permettant la migration du mélange des composantes A et B dans le trou de forage afin de combler l'espace annulaire entre ce boulon d'ancrage et le terrain.

Selon une autre caractéristique, l'injection se fait dans des éléments choisis dans la liste formée par : les boulons d'ancrage à tige pleine dits «Solid Rebar Bolts», les boulons d'ancrage dynamiques à tige pleine, les boulons d'ancrage dynamiques à tige creuse dits «Hollow Care Bolts» et les ancrages longs de type boulons-câble dits «Long Tendons».

Les compositions mélangées à partir de A et de B obtenues dans la présente invention confèrent certains avantages par rapport aux systèmes existants. Par exemple, ces compositions améliorent la contrainte en compression par rapport au produit utilisant uniquement le mélange connu de silicate de métal alcalin et de diisocyanate. Les compositions selon l'invention limitent l'expansion en présence d'eau permettant de conserver des propriétés mécaniques élevées, contrairement aux systèmes à base de polyuréthane qui ont tendance à s'expanser et à perdre en résistance mécanique. Les compositions de la présente invention ont également des points éclair (flash point) supérieurs à 100 °C, contrairement aux produits de scellement à base de polyesters insaturés contenant du styrène (flash point de l'ordre de 35 °C). La présente invention permet en outre d'atteindre rapidement les propriétés mécaniques recherchées tout en améliorant les propriétés en flexibilité par rapport à des systèmes entièrement fondés sur une base minérale comme par exemple les produits à base de silicate et de ciment, les bétons... En outre, l'utilisation d'au moins un plastifiant dans la composante B est impérative pour garantir que le produit ne soit pas friable après polymérisation permettant ainsi de garantir des résistances mécaniques élevées pour des temps de polymérisation allant de quelques secondes (20 secondes) à plusieurs minutes (15 minutes), et cela, même sur de faibles épaisseurs (quelques millimètres). C'est ce que montre notamment l'exemple 2.

Les compositions de la présente invention, de par leur fluidité, permettent une application par injection des boulons d'ancrage, ce qui améliore la qualité et le taux de remplissage de l'espace à combler pour assurer une bonne tenue mécanique du boulon d'ancrage et ce, même sur de grandes longueurs. Ceci en comparaison aux scellements réalisés à l'aide de compositions à base de polyesters insaturés mises en oeuvre par injection ou sous la forme de cartouches/capsules pouvant rencontrer certains problèmes de performances liés aux conditions de mise en oeuvre (viscosité importante limitant la pompabilité du mélange notamment sur de grandes longueurs de scellement, remplissage incomplet de l'espace à combler, notamment dans les terrains fracturés), les compositions de la présente invention sont particulièrement adaptées pour les applications de scellement de boulons d'ancrage à tige pleine dits «Solid Rebar Bolts», de boulons d'ancrage dynamiques à tige pleine, de boulons d'ancrage dynamiques à tige creuse dits «Hollow Care Bolts» et d'ancrages longs de type boulons-câble dits «Long Tendons».

Selon la présente invention, il est donc proposé un procédé de production de produits siliceux qui comprend dans son principe la réaction d'au moins une solution aqueuse d'un silicate de métal alcalin avec au moins un prépolymère de polyisocyanate, de préférence un diisocyanate organique, en présence d'au moins un plastifiant, combinée à la réaction de ladite au moins une solution aqueuse de silicate de métal alcalin avec au moins un ciment. En variant la nature et les proportions relatives des réactifs et des conditions de réaction, on peut obtenir des produits solides présentant des caractéristiques physiques différentes.

Il a été constaté que les réactions en question entraînaient la prise de la solution de silicate(s) de métal alcalin. Il est probable qu'un certain nombre de réactions chimiques soient impliquées. Ainsi, il est connu que les polyisocyanates organiques et l'eau réagissent conjointement à la production de polymères formant des liaisons urée avec production de dioxyde de carbone. Il est également considéré comme probable que le dioxyde de carbone ainsi formé réagit tout ou partie avec les silicates de métal alcalin pour former un gel de silice solide. Il est également connu que la prise des ciments peut être accélérée par ajout de silicate alcalin.

Les réactions entre la solution de silicate de métal alcalin et les poly/diisocyanates étant des réactions sensiblement lentes, il est avantageux de les accélérer par ajout d'une amine tertiaire ou tout autre système catalytique compatible avec la solution de métal alcalin, soit par l'intermédiaire d'un troisième composant.

Il est bien connu que les silicates liquides ou en poudre peuvent être ajoutés aux ciments pour accélérer la prise.

Dans un autre mode réalisation, le produit peut se présenter sous forme de multi-composantes, comme par exemple les tri-composantes... Les différentes composantes peuvent être pompées séparément lors de l'utilisation, ou faire l'objet de prémélange avant ou pendant l'utilisation comme par exemple l'ajout du ciment dans le composant polyisocyanate in situ. Selon un exemple particulier de ce mode de réalisation, le produit fait intervenir une paire de composantes de type A caractérisées par des temps de réaction respectifs différents, de sorte que la réaction d'une première des composantes est plus rapide que celle de la seconde. En fonction de la proportion de chacune des deux composantes, le temps de réaction moyen du mélange de la paire de composantes de type A se trouve ajusté de façon à opérer un réglage de la vitesse de réaction et donc de la durée de celle-ci en fonction, d'une part, de la finalité recherchée, notamment des éléments fixés par la composition : câbles, boulons... et, d'autre part, des conditions de mise en oeuvre de la composition et du procédé de l'invention, notamment en lien avec la température ou l'hygrométrie de l'environnement. Selon une spécificité de cet exemple particulier, l'une des deux composantes de type A, notamment la composante dont le temps de réaction est la moins rapide, est associée avec un accélérateur de prise dédié dont le dosage permet d'opérer une accentuation de la vitesse de réaction de la composante, de sorte que le temps de réaction moyen de la composante de type A la plus lente et donc du mélange de la paire de composantes de type A se trouve ajusté en conséquence.

Dans un autre mode de réalisation, le ciment ou le mélange de ciment de la composante de type B peut être introduit en poudre à l'aide d'un bac mélangeur ou tout autre système permettant le mélange poudre/liquide à la composante de type B contenant le ou les groupements isocyanates. Il convient de relever que, lorsque le produit fait intervenir une pluralité de composants, la stabilité du ciment est susceptible d'être obtenue par une opération de mouillage ou d'humidification préalable de celui-ci. Cette opération est effectuée avec tout élément ou mélange d'éléments liquides non-réactifs qui intervient dans la composition de la composante de type B. A titre d'exemple, des plastifiants ou des ignifugeants sont susceptibles de correspondre à de tels éléments. Ce mélange comprenant le ciment qu'il stabilise est également susceptible d'intégrer un ou plusieurs additifs rhéologiques aptes et destinés à piéger de l'humidité du mélange, ainsi que des charges contenues initialement dans la composante de type B. De tels additifs représentent alors 0% à 10% du poids de la composante, préférentiellement 1% à 5% du poids de la composante. Ce mélange comprenant le ciment qu'il stabilise et destiné à être intégré à la composante de type B, est susceptible de présenter la forme d'une pâte ou d'une poudre apte à être additionnée et mélangée aux autres éléments qui entrent dans la composition de la composante de type B préalablement à son utilisation.

Dans certains modes de réalisation, la charge peut être un matériau inerte de telle sorte qu'elle ne réagisse pas avec les substances de la composition. Le type de charge et/ou la quantité de charge utilisée peuvent être choisis en fonction de la manière dont la composition doit être mise en oeuvre.

Le type de charge et les propriétés (granulométrie, impureté, teneur en eau...) des charges utilisées peuvent facilement être déterminés par l'homme du métier ; par exemple, la charge peut être du talc, du kaolin, de l'hydroxyde d'aluminium, de la bentonite...

Les charges peuvent être incorporées à l'un ou l'autre des composants A ou B en respectant la compatibilité et la stabilité chimique avec les autres produits constituant ledit composant.

Les charges peuvent être utilisées seules ou en mélange et de granulométries différentes (par exemple, des fines associées à des moins fines). Les charges additionnées avec le ciment ou/et l'isocyanate devront être exemptes d'eau et d'humidité pour éviter une réaction de ces dernières pendant le stockage.

Selon un autre mode de réalisation, des fibres sont utilisées en complément ou en remplacement des fibres présentes dans certains scellements réalisés, par exemple, sous la forme de barres ou de lames, de façon à améliorer la résistance mécanique de la composition. A titre préférentiel et sans limitation de l'invention, les fibres sont coupées et additionnées à l'une ou l'autre des composantes ou, alternativement, les fibres sont coupées et introduites au reste du mélange, dans le dispositif mélangeur tel que le pistolet mélangeur, au moment de l'opération d'application, c'est-à-dire après que le mélange des composantes ait été effectué, par exemple par le mélangeur statique. Il convient de relever que les propriétés apportées par les fibres sont susceptibles de varier selon leurs nature, leurs longueurs, leurs diamètres, leurs caractéristiques mécaniques respectives mais également selon leur proportion dans le mélange avec les autres composants et le mode de leur introduction aux autres composants du mélange. A titre d'exemple, les fibres utilisées peuvent être de type fibres de verre ou fibres de polyéthylène et/ou polypropylène.

Le choix des ciments, des charges ou des fibres utilisés pourra être fait en fonction du matériel d'injection utilisé. Par exemple, certains ciments (comme par exemple les ciments naturels prompts) ou certaines charges (par exemple les quartz fins tels que les ASPOLIT) peuvent être abrasifs pour les systèmes de mises en oeuvre comme, par exemple, les pompes à pistons ou les pompes à engrenages. Il convient de relever que, en raison de la plage resserrée de la granulométrie des micro-ciments, ceux-ci sont susceptibles d'être utilisés seuls ou en mélange de façon à faciliter le choix du matériel d'injection utilisé pour la mise en oeuvre.

Dans certains modes de réalisation, lorsque cela sera jugé nécessaire, les composants ajoutés à l'isocyanate pourront subir un traitement physique (chaleur, dessiccation...) ou chimique (par exemple par addition d'un produit tel que des zéolites, des aluminosilicates...) permettant de retirer ou de piéger l'eau présente afin de limiter les réactions avec l'isocyanate pouvant provoquer une altération des propriétés (augmentation de la viscosité, gonflement des conditionnements...) pendant la période de stockage avant son utilisation. Dans la mesure du possible, pour limiter ces problèmes, les matières premières mélangées à l'isocyanate seront choisies avec une teneur en eau la plus basse possible.

Il est bien entendu que les différents additifs et matières premières de chaque catégorie pourraient être utilisés seuls ou en mélange avec d'autres additifs de même catégorie afin d'optimiser les performances générales du produit fini, comme par exemple du TCPP avec du TEP, du Luvothix avec de l'Aerosil 202 comme évoqué plus haut.

Les proportions relatives du silicate de métal alcalin, de l'isocyanate et du ciment peuvent varier, ce qui permet d'obtenir, comme indiqué ci-dessus, des produits de caractéristiques physiques différentes et de structures chimiques probablement différentes.

Dans certains modes de réalisation, il est possible de faire varier la vitesse de réaction, notamment le temps de prise, pour obtenir des produits plus lents, par exemple avec un temps de prise de plusieurs minutes, ou plus rapides, par exemple avec un temps de prises de quelques dizaines de secondes, en faisant intervenir un composé accélérateur dans la composition, et notamment en modifiant le type ou/et la quantité d'accélérateur (ou catalyseur de réaction) présent dans la composante A. Le dosage permet d'opérer un réglage de la vitesse et donc de la durée de réaction en fonction de la finalité et des conditions de mise en oeuvre de la composition et du procédé de l'invention. L'ajout d'un accélérateur de prise en 3ème composante est également possible pendant la mise en oeuvre au moment de l'injection.

Dans certains modes de réalisation, le ratio volumétrique entre la composante A et la composante B peut varier. Le choix du ratio utilisé se fera en fonction du rapport entre les silicates de métaux alcalins, le ou les prépolymères de MDI et le ciment et du taux de charge dans chacune des composantes. Le choix du ratio peut également dépendre de la performance recherchée (caractéristiques mécaniques), du type et du matériel de mise en oeuvre utilisé (pompes d'injection).

L'invention sera mieux comprise, grâce à la présente description, qui se rapporte à des modes de réalisation préférés, donnés à titre d'exemples non limitatifs, et expliqués avec référence au dessin schématique annexé, dans lequel :

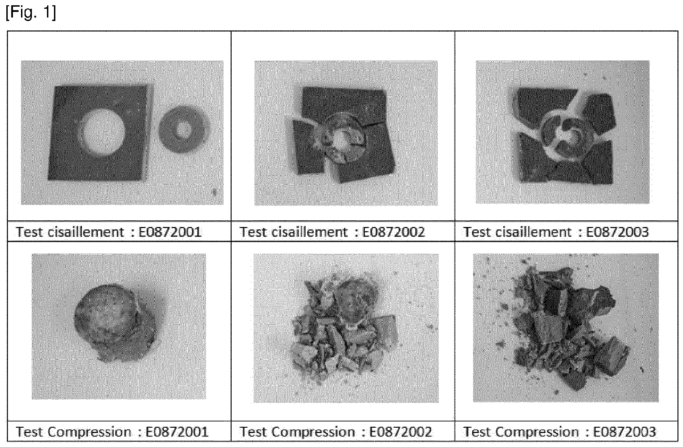

[Fig. 1] représente une photo de tests de compositions selon la présente invention.

A titre d'exemples et de comparaison, il a été effectué des mesures de caractéristiques mécaniques sur différentes compositions :
Exemple 1 : Composition permettant d'obtenir un temps de prise de 2 à 3 minutes.

**[Tableau 1]**

| Ratio composante A / composante B : 1/2 |
|---|
| **Composante A de formulation (en poids) :** |
| 91,5% de silicate de sodium grade 48/50 |
| 5,0% Glycol (Monoéthylène glycol) |
| 0,2% Catalyseur de réaction (2-(2-diméthylaminoéthoxy)éthanol) |
| 0,3% Agent gélifiant (diéthanolamine DEA) |
| 3,0% Eau |
| |

| **Composante B de formulation (en poids)** : |
|---|
| 47,6% Prépolymère de MDI avec une teneur en NCO de 28% obtenu par réaction d'un MDI polymérique (Lupranat M20S marque dép.) avec un diol de masse mol. 2000 g/mol (Lupranol 1000 marque dép.) |
| 10,4% Plastifiants (5,2% de ABDG et 5,2% d'ester méthylique de colza) |
| 38,7% Ciment CEM I 52.5 |
| 1,7% Additif rhéologique (Luvothix R-RF) |
| 1,6% Tamis moléculaire (Sylosiv) |

La résistance en compression à 10% de déformation (testée selon ISO 604) du matériau non expansé résultant était de 27,1 MPa après 24 heures à 20 °C, le module d'élasticité en compression était de 332 MPa et la contrainte en cisaillement selon ASTM D732 était de 15,4 MPa.

Exemple 2 : Composition permettant d'obtenir un temps de prise de l'ordre de 10 minutes à 20 °C.

**[Tableau 2]**

| | | | |
|---|---|---|---|
| **Composante A** - **Formulation (% en poids)** | A0832001 | | |
| Silicate de sodium grade 49-51 | 76,65 | | |
| Eau | 3,0 | | |
| Glycérol | 20,0 | | |
| 2-(2-diméthylaminoéthoxy)éthanol | 0,05 | | |
| Diéthanolamine (DEA) | 0,3 | | |
| Total | 100,0 | | |

| **Composante B - Formulation (% en poids)** | **B0832001** | **B0832002** | **B0832003** |
|---|---|---|---|
| MDI polymérique | | 55,0 | 65,0 |
| Prépolymère de MDI avec une teneur en NCO de 28% obtenu par réaction d'un MDI polymérique (Lupranat M20S marque dép.) avec un diol (Lupranol 1000 marque dép.) de masse mol. de 2000 g/mol | 56,6 | | |
| Plastifiant (acétate de butyl diglycol ABDG) | 4,2 | 5,0 | |
| Plastifiant (ester méthylique de Colza) | 4,2 | 5,0 | |
| SYLOSIV | 2,0 | 2,0 | 2,0 |
| Agent rhéologique LEVOTHIX R-RF | 2,0 | 2,0 | 2,0 |
| Charge : Kaolin OPTIWHITE MX | 3,0 | 3,0 | 3,0 |
| Ciment : EQIOM CEM I 52.5 N | 28,0 | 28,0 | 28,0 |
| Total | 100,0 | 100,0 | 100,0 |

Les tests mécaniques sont effectués sur le matériau obtenu après mélange après 24 heures à 20 °C selon la norme ISO 604 pour les tests en compression et selon ASTM D732 pour les tests en cisaillement.

Pour le scellement de câbles, un temps de prise long de l'ordre de 10 minutes est nécessaire pour permettre l'injection du trou de forage avec un produit thixotrope qui ne s'écoule pas du trou mais qui ne durcit pas immédiatement, permettant l'introduction de longs câbles (par exemple de 8 mètres) avant la prise du produit.

Les opérations de mise en oeuvre sont susceptibles de faire intervenir une ou deux étapes. Lorsque la mise en oeuvre ne comprend qu'une seule étape, également appelée *« post grouting* » celle-ci consiste à injecter la composition directement au travers du boulon d'ancrage après la mise en place du boulon dans le forage par l'intermédiaire d'une barre creuse et d'un boulon auto-forant ou, alternativement, par l'intermédiaire d'un tube d'injection installé avec le boulon dans le cas d'un boulon câble, d'une barre pleine ou d'un profilé en fibre de verre. Lorsque la mise en oeuvre s'opère en deux étapes, le process, également appelé « *pré-grouting* », consiste, dans un premier temps, en une étape d'injection de la composition dans l'orifice foré de l'ancrage puis, dans un second temps, en une étape d'insertion des éléments d'ancrage, des boulons, du câble et des fibres. De façon préférentielle, l'opération d'injection est effectuée depuis le fond du forage, au niveau duquel l'orifice du tube d'injection se trouve inséré pour être retiré progressivement au fur et à mesure de l'injection de la composition, de sorte que la composition est injectée dans le forage d'ancrage en limitant le risque de formation d'une bulle.

Dans le tableau 3, on a utilisé une composante A contenant moins de catalyseur de réaction avec un temps de réaction avoisinant les 10 minutes. Le mélange E0872001 utilise un combiné du prépolymère d'isocyanate, du ciment et du plastifiant contrairement à E0872002 qui contient un isocyanate, du plastifiant et du ciment ou E0872003 qui contient uniquement un isocyanate et du ciment. On observe clairement de meilleures propriétés mécaniques sur le mélange E0872001. De même, on observe une friabilité (cf. photos de la figure 1) beaucoup moins importante sur E0872001 que sur E0872002 ou E0872003. Les résultats mécaniques sont indiqués dans le tableau 3.

**[Tableau 3]**

| | | | |
|---|---|---|---|
| **Essai** | **E0872001** | **E0872002** | **E0872003** |
| **Composante A** | **A0832001** | **A0832001** | **A0832001** |
| **Composante B** | **B0832001** | **B0832002** | **B0832003** |
| **Ratio Composante A / Composante B** | **1/2** | **1/2** | **1/2** |
| **Contrainte en compression à 10% de déformation (MPa)** | **18,6** | **13,2** | **2,7** |
| **Contrainte en compression à 20% de déformation (MPa)** | **24,5** | **11,7** | **0,0** |
| **Contrainte en compression à 30% de déformation (MPa)** | **21,9** | **10,1** | **0,0** |
| **Contrainte aux cisaillement (MPa)** | **7,0** | **3,1** | **2,7** |

Tableau 3 (Résultats mécaniques sur produit avec des temps de prises de 10 minutes)

Mise en oeuvre de la composition selon l'invention : Dans certains modes de réalisation, la mise en oeuvre des composants sera faite à l'aide de pompes volumétriques comme par exemple des pompes à pistons, des pompes à engrenages, des pompes à queue de cochon (vis sans fin)..., ou avec tout autre équipement permettant l'injection en respectant le ratio volumétrique entre les différents composants, comme par exemple des plateaux suiveurs utiles pour les produits visqueux ou pâteux. La ou les pompes utilisées permettront l'injection du mélange des différentes composantes dans le trou d'ancrage par l'intermédiaire d'une canne d'injection ou directement par, c'est-à-dire à travers, le boulon d'ancrage comprenant un écrou creux, comme dans le cadre d'une mise en oeuvre de type « *post grouting ».* Le mélange des différentes composantes se fait pendant l'injection à l'aide d'un mélangeur statique ou dynamique. Alternativement, le mélange des différentes composantes se fait après injection, par introduction en rotation de la broche de scellement assurant ainsi le mélange des composantes, comme dans le cadre d'une mise en oeuvre de type *«pré grouting ».* Dans chacun des cas, le mélange des composantes génère la réaction chimique de durcissement permettant de sceller le boulon d'ancrage, la broche de scellement ou le câble dans le terrain.

Le procédé par injection nécessite des compositions dont la viscosité sera maitrisée et utilisable sur une plage de température de 5 à 50 °C et généralement de 10 à 35 °C. Ce paramètre est important car il conditionne la quantité de ciment, de charges et d'agent rhéologique utilisable dans la composante B ainsi que la quantité et le type de prépolymère de MDI et de plastifiant. Cette viscosité sera de 50 à 1500 mPa.s et de préférence 200 à 1100 mPa.s à 20 °C pour la composante A et de 50 à 3000 mPa.s et de préférence 150 à 1500 mPa.s à 20 °C pour la composante B. Les produits pouvant contenir des additifs rhéologiques qui agissent sur la viscosité, les valeurs sont mesurées de préférence avec un système MS Z3 DIN à une vitesse angulaire de 700 ± 100 (1/s) correspondant à une vitesse de rotation de 500±100 rpm permettant de s'affranchir de ces effets rhéologiques surtout présent à basse vitesse (entre 0 et 200 rpm).

L'utilisation d'un prépolymère de MDI améliore les performances mécaniques comme le cisaillement et la friabilité mais détériore la pompabilité de par sa viscosité plus élevée qu'un MDI polymérique. L'utilisation combinée d'un prépolymère de MDI et d'un plastifiant permet de maitriser la viscosité de la composante B tout en assurant de meilleures propriétés mécaniques.

## Revendications

1. Une composition bicomposante constituée d'une composante A destinée à être mélangée, in situ, avec une composante B en vue de former un composé ou matériau organo-minéral injectable ou pompable, notamment pour le scellement de boulons d'ancrage dynamiques par injection, la composante A comprenant essentiellement au moins un silicate de métal alcalin et la composante B comprenant essentiellement au moins un prépolymère de polyisocyanate et au moins un ciment, **caractérisé en ce que** la composante A contient en outre au moins un polyol de masse moléculaire comprise entre 50 et 200 g/mol, un catalyseur de polymérisation comprenant au moins une fonction alcool ou amine primaire et au moins un agent gélifiant rendant le mélange final des deux composantes A et B sous la forme d'un gel sans provoquer la prise du mélange desdites composantes, et **en ce que** la composante B comprend en outre au moins un plastifiant compatible, le mélange final desdites composantes A et B conduisant à la formation d'un matériau organo-minéral présentant une résistance à la compression à 10 % de déformation d'au moins 17 MPa, selon la norme ISO 604 et une résistance au cisaillement d'au moins 7 MPa, selon la norme AFTM D732, pour des temps de prise compris entre 20 secondes et 15 minutes à 20°C.

2. Composition selon la revendication 1, dans laquelle le silicate de métal alcalin est un silicate de sodium liquide de rapport molaire SiO₂/Na₂O de 1,6 à 3,5 tel qu'on obtient Na₂O.xSiO₂ + H₂O (x=1,6-3,5) et de préférence 1,8 à 2,8.

3. Composition selon l'une quelconque des revendications 1 ou 2, dans laquelle le ou les prépolymères de polyisocyanate présentent une teneur en groupements NCO totale comprise entre 22 et 32 %, de préférence comprise entre 25 et 28 %, et sont choisis dans le groupe formé par : les prépolymères à base de diphénylméthane-diisocyanate (MDI), le diphénylméthane-4,4'-diisocyanate et le MDI polymérique.

4. Composition selon l'une quelconque des revendications 1 à 3, dans laquelle le ciment ou le mélange de ciments utilisé est à base de : un Ciment Portland Artificiel (CEM I), Ciment Portland Composé (CEM II), Ciment de Haut-Fourneau (CEM III), Ciment Pouzzolanique (CEM IV), Ciment Composé (CEM V), un ciment de classe de résistance 32,5 ou 42,5 ou 52,5, un ciment prompt, un ciment prompt naturel (CNP) NF P 15-314 ou un ciment alumineux fondu (CA) NF P 15-315, ou encore de micro-ciments.

5. Composition selon l'une quelconque des revendications 1 à 4, **caractérisé en ce que** le ou les plastifiants sont des plastifiants non-aqueux ne contenant pas de groupement chimique réactif avec la fonction isocyanate.

6. Composition selon l'une quelconque des revendications 1 à 5 **caractérisée en ce que** la composante A est constituée de :
- 50 à 98 % en poids, de préférence 65 à 95 % en poids d'au moins un silicate de métal alcalin liquide ;
- 1 à 40 % en poids, de préférence 5 à 30 % en poids d'au moins un polyol de masse moléculaire comprise entre 50 et 200 g/mol ;
- 0,01 à 5 % en poids, de préférence 0,025 à 2 % en poids d'au moins un catalyseur de polymérisation ;
- 0,01 à 5 % en poids, de préférence, 0,1 à 1 % en poids d'au moins un agent gélifiant;
- 0 à 10 % en poids d'eau, de préférence 1 à 5 % d'eau, et
- 0 à 5 % en poids, de préférence 1 à 3 % en poids, d'au moins un promoteur d'adhérence compatible ;
- la somme des constituants de la composante A étant de 100 % ;
**en ce que** la composante B est constituée de :
- 40 à 80 % en poids, de préférence 50 à 70 % en poids d'au moins un prépolymère d'isocyanate ;
- 1 à 20 % en poids, de préférence 5 à 10 % en poids d'au moins un plastifiant ;
- 5 à 50 % en poids, de préférence 15 à 35 % en poids d'au moins un ciment ;
- 0 à 10 % en poids, de préférence 1 à 5 % en poids d'au moins un agent rhéologique évitant la sédimentation des poudres ;
- 0 à 20 % en poids, de préférence 1 à 5 % en poids d'au moins un agent de charge non réactif avec les groupements isocyanates ;
- 0 à 20 % en poids, de préférence 5 à 10 % en poids d'au moins un ignifugeant pour le matériau formé, et ;
- 0 à 5 % en poids, de préférence 1 à 3 % en poids d'au moins un promoteur d'adhérence compatible ;
- la somme des constituants de la composante B étant de 100 %.

7. Composition selon l'une quelconque des revendications 1 à 6 **caractérisée en ce que** le ratio volumétrique A/B entre la composante A et la composante B est inférieur à 1, et de préférence compris entre 1/2 et 2/3.

8. Composition selon l'une quelconque des revendications 1 à 7, **caractérisée en ce que** la viscosité, mesurée à 20 °C avec un système MS Z3 DIN à une vitesse de rotation de 500 +/- 100 rpm, est comprise entre 50 à 1500 mPa.s, de préférence, 200 à 1100 mPa.s pour la composante A et comprise entre 50 à 3000 mPa.s, de préférence, 150 à 1500 mPa.s pour la composante B.

9. Procédé de mise en oeuvre d'une composition selon l'une quelconque des revendications 1 à 8, **caractérisé en ce qu'**on injecte les composantes A et B à l'aide de pompes volumétriques ou d'un équipement similaire permettant l'injection en respectant le ratio volumétrique entre les différentes composantes dans un trou d'ancrage par l'intermédiaire d'une canne d'injection ou directement par un boulon d'ancrage auto-foreur ou non.

10. Procédé de mise en oeuvre selon la revendication 9, dans laquelle, dans le cas du boulon d'ancrage creux faisant office de canne d'injection, celui-ci comporte une entrée et une sortie permettant la migration de la composition telle que définie à l'une quelconque des revendications 1 à 9 dans le trou de forage afin de combler l'espace annulaire entre ce boulon d'ancrage et le terrain.

11. Utilisation d'une composition selon l'une quelconque des revendications 1 à 8, pour une application de scellement de boulons d'ancrage dynamiques, en particulier de boulons d'ancrage dynamiques à tige pleine, de boulons d'ancrage dynamiques à tiges creuses «Hollow Care Bolts» et d'ancrages longs de type boulons-câble dits «Long Tendons».

## Patentansprüche

1. Zusammensetzung aus zwei Komponenten, die aus einer Komponente A besteht, die in situ mit einer Komponente B gemischt werden soll, damit eine spritzbare oder pumpfähige organisch-mineralische Verbindung oder ein entsprechendes Material entsteht, insbesondere zum Eingießen von dynamischen Ankerbolzen mittels Injektion, wobei Komponente A im Wesentlichen ein Alkalimetallsilikat umfasst und Komponente B im Wesentlichen mindestens ein Polyisocyanatprepolymer und mindestens einen Zement umfasst, **dadurch gekennzeichnet, dass** Komponente A ferner mindestens ein Polyol mit einer Molekülmasse zwischen 50 und 200 g/mol, einen Polymerisationskatalysator, der mindestens eine Alkoholfunktion oder primäre Aminfunktion umfasst, und mindestens ein Geliermittel enthält, das die Endmischung aus den beiden Komponenten A und B in Form eines Gels bereitstellt, ohne dass es das Aushärten der Mischung aus den Komponenten bewirkt, und dadurch, dass Komponente B ferner mindestens einen kompatiblen Plastifizierer umfasst, wobei die Endmischung aus den Komponenten A und B zur Bildung eines organischmineralischen Materials führt, das eine Druckfestigkeit bei 10 % Verformung von mindestens 17 MPa gemäß Norm ISO 604 und eine Scherfestigkeit von mindestens 7 MPa gemäß Norm ASTM D732 bei Aushärtezeiten zwischen 20 Sekunden und 15 Minuten bei 20°C aufweist.

2. Zusammensetzung nach Anspruch 1, wobei das Alkalimetallsilikat ein flüssiges Natriumsilikat mit einem Molverhältnis SiO₂/Na₂O von 1,6 bis 3,5 ist, sodass Na₂O.xSiO₂ + H₂O (x=1,6-3,5) erhalten wird, und vorzugsweise 1,8 bis 2,8.

3. Zusammensetzung nach einem der Ansprüche 1 oder 2, wobei das oder die Polyisocyanatprepolymere einen Gesamtgehalt an NCO-Gruppen zwischen 22 und 32 %, vorzugsweise zwischen 25 und 28 % aufweisen und aus der Gruppe ausgewählt sind, die von Prepolymeren auf Basis von Diphenylmethandiisocyanat (MDI), Diphenylmethan-4,4'-diisocyanat und polymerem MDI gebildet wird.

4. Zusammensetzung nach einem der Ansprüche 1 bis 3, wobei der verwendete Zement oder das verwendete Zementgemisch auf Folgendem basiert:
einem künstlichen Portlandzement (CEM I), Portlandkompositzement (CEM II),
Hochofenzement (CEM III), Puzzolanzement (CEM IV), Kompositzement (CEM V),
einem Zement der Festigkeitsklasse 32,5 oder 42,5 oder 52,5, einem Schnellzement, einem Naturschnellzement (CNP) NF P 15-314 oder einem
Tonerdeschmelzzement (CA) NF P 15-315 oder auch Mikrozementen.

5. Zusammensetzung nach einem der Ansprüche 1 bis 4, **dadurch gekennzeichnet, dass** der oder die Plastifizierer nicht wässrige Plastifizierer sind, die keine chemische Gruppe enthalten, die mit der Isocyanatfunktion reagiert.

6. Zusammensetzung nach einem der Ansprüche 1 bis 5, **dadurch gekennzeichnet, dass** Komponente A aus Folgendem besteht:
- 50 bis 98 Gewichts-%, vorzugsweise 65 bis 95 Gewichts-% von mindestens einem flüssigen Alkalimetallsilikat;
- 1 bis 40 Gewichts-%, vorzugsweise 5 bis 30 Gewichts-% von mindestens einem Polyol mit einer Molekülmasse zwischen 50 und 200 g/mol;
- 0,01 bis 5 Gewichts-%, vorzugsweise 0,025 bis 2 Gewichts-% von mindestens einem Polymerisationskatalysator;
- 0,01 bis 5 Gewichts-%, vorzugsweise 0,1 bis 1 Gewichts-% von mindestens einem Geliermittel;
- 0 bis 10 % Gewichts-% Wasser, vorzugsweise 1 bis 5 % Wasser, und
- 0 bis 5 Gewichts-%, vorzugsweise 1 bis 3 Gewichts-% , von mindestens einem kompatiblen Haftvermittler;
- wobei die Summe der Bestandteile der Komponente A 100 % beträgt;
dadurch, dass Komponente B aus Folgendem besteht:
- 40 bis 80 Gewichts-%, vorzugsweise 50 bis 70 Gewichts-% von mindestens einem Isocyanatprepolymer;
- 1 bis 20 Gewichts-%, vorzugsweise 5 bis 10 Gewichts-% von mindestens einem Plastifizierer;
- 5 bis 50 Gewichts-%, vorzugsweise 15 bis 35 Gewichts-% von mindestens einem Zement;
- 0 bis 10 Gewichts-%, vorzugsweise 1 bis 5 Gewichts-% von mindestens einem Rheologiemodifikator, der das Absetzen von Pulvern verhindert;
- 0 bis 20 Gewichts-%, vorzugsweise 1 bis 5 Gewichts-% von mindestens einem Füllstoff, der nicht mit Isocyanatgruppen reagiert;
- 0 bis 20 Gewichts-%, vorzugsweise 5 bis 10 Gewichts-% von mindestens einem Flammschutzmittel für das entstandene Material und
- 0 bis 5 Gewichts-%, vorzugsweise 1 bis 3 Gewichts-% von mindestens einem kompatiblen Haftvermittler;
- wobei die Summe der Bestandteile der Komponente B 100 % beträgt.

7. Zusammensetzung nach einem der Ansprüche 1 bis 6, **dadurch gekennzeichnet, dass** das Volumenverhältnis A/B zwischen Komponente A und Komponente B unter 1 und vorzugsweise zwischen 1/2 und 2/3 liegt.

8. Zusammensetzung nach einem der Ansprüche 1 bis 7, **dadurch gekennzeichnet, dass** die bei 20 °C mit einem System MS Z3 DIN bei einer Drehzahl von 500 +/- 100 U/min gemessene Viskosität bei Komponente A zwischen 50 und 1500 mPa.s, vorzugsweise 200 und 1100 mPa.s und bei Komponente B zwischen 50 und 3000 mPa.s, vorzugsweise 150 und 1500 mPa.s liegt.

9. Verfahren zum Verwenden einer Zusammensetzung nach einem der Ansprüche 1 bis 8, **dadurch gekennzeichnet, dass** mithilfe von Verdrängerpumpen oder ähnlicher Ausrüstung, mit der unter Einhaltung des Volumenverhältnisses zwischen den verschiedenen Komponenten eine Injektion möglich ist, über ein Injektionsrohr oder unmittelbar über einen selbstbohrenden oder nicht selbstbohrenden Ankerbolzen Komponenten A und B in eine Ankerbohrung injiziert werden.

10. Verfahren zur Verwendung nach Anspruch 9, wobei bei einem Ankerhohlbolzen, der als Injektionsrohr dient, dieser eine Eintritts- und eine Austrittsöffnung aufweist, die ermöglicht, dass die Zusammensetzung nach einem der Ansprüche 1 bis 9 in das Bohrloch gelangt, damit der Ringraum zwischen diesem Ankerbolzen und dem Gelände ausgefüllt wird.

11. Verwendung einer Zusammensetzung nach einem der Ansprüche 1 bis 8 für eine Anwendung zum Eingießen von dynamischen Ankerbolzen, insbesondere von dynamischen Ankerbolzen mit Vollschaft, dynamischen Ankerbolzen mit Hohlschaft "Hollow care bolts" und von langen Verankerungen in der Ausführung von als "Long Tendons" bezeichneten Zuggliedern.

## Claims

1. A two-component composition constituted by a component A intended to be mixed, in situ, with a component B in order to form an injectable or pumpable organo-mineral material or compound, notably for the injection-sealing of dynamic anchoring bolts, the component A comprising essentially at least one alkali metal silicate and the component B comprising essentially at least one polyisocyanate prepolymer and at least one cement, **characterized in that** the component A moreover contains at least one polyol with a molecular mass of between 50 and 200 g/mol, a polymerization catalyst comprising at least one primary amine or alcohol function and at least one gelling agent manifesting the final mixture of the two components A and B in the form of a gel without causing the mixture of said components to set, and **in that** the component B moreover comprises at least one compatible plasticizer, the final mixture of said components A and B leading to the formation of an organo-mineral material exhibiting compressive strength at 10% strain of at least 17 MPa, in accordance with the standard ISO 604, and shear strength of at least 7 MPa, in accordance with the standard AFTM D732, for setting times of between 20 seconds and 15 minutes at 20°C.

2. The composition as claimed in claim 1, wherein the alkali metal silicate is a liquid sodium silicate with a molar ratio SiO₂/Na₂O of 1.6 to 3.5, such that Na₂O.xSiO₂ + H₂O (x=1.6-3.5) is obtained, and preferably 1.8 to 2.8.

3. The composition as claimed in either one of claims 1 and 2, wherein the polyisocyanate prepolymer(s) have a total proportion of NCO groups of between 22% and 320, preferably between 25% and 28%, and are selected from the group formed by: prepolymers based on diphenylmethane diisocyanate (MDI), diphenylmethane-4,4'-diisocyanate and polymeric MDI.

4. The composition as claimed in any one of claims 1 to 3, wherein the cement or the mixture of cements used is based on: an Artificial Portland Cement (CEM I), Composite Portland Cement (CEM II), Blast-Furnace Cement (CEM III), Pozzolanic Cement (CEM IV), Composite Cement (CEM V), a cement of strength class 32.5 or 42.5 or 52.5, a prompt cement, a prompt natural cement (PNC) NF P 15-314, or a molten high-alumina cement (CA) NF P 15-315, or else microcements.

5. The composition as claimed in any one of claims 1 to 4, **characterized in that** the plasticizer (s) are non-aqueous plasticizers that do not contain any group which chemically reacts with the isocyanate function.

6. The composition as claimed in any one of claims 1 to 5, **characterized in that** the component A is constituted by:
- 50% to 98% by weight, preferably 65% to 95% by weight, of at least one alkali metal silicate that is liquid;
- 1% to 40% by weight, preferably 5% to 30% by weight, of at least one polyol with a molecular mass between 50 and 200 g/mol;
- 0.01% to 5% by weight, preferably 0.025% to 2% by weight, of at least one polymerization catalyst;
- 0.01% to 5% by weight, preferably 0.1% to 1% by weight, of at least one gelling agent;
- 0% to 10% by weight of water, preferably 1% to 5% by weight of water, and
- 0% to 5% by weight, preferably 1% to 3% by weight, of at least one compatible adhesion promoter;
- the sum of the constituents of the component A being 100%;
and **in that** the component B is constituted by:
- 40% to 80% by weight, preferably 50% to 70% by weight, of at least one isocyanate prepolymer;
- 1% to 20% by weight, preferably 5% to 10% by weight, of at least one plasticizer;
- 5% to 50% by weight, preferably 15% to 35% by weight, of at least one cement;
- 0% to 10% by weight, preferably 1% to 5% by weight, of at least one rheological agent that avoids settling of the powders;
- 0% to 20% by weight, preferably 1% to 5% by weight, of at least one filling agent which does not react with the isocyanate groups;
- 0% to 20% by weight, preferably 5% to 10% by weight, of at least one flame retardant for the material formed; and
- 0% to 5% by weight, preferably 1% to 3% by weight, of at least one compatible adhesion promoter;
- the sum of the constituents of the component B being 100%.

7. The composition as claimed in any one of claims 1 to 6, **characterized in that** the volumetric ratio A/B between the component A and the component B is less than 1, preferably is between 1/2 and 2/3.

8. The composition as claimed in any one of claims 1 to 7, **characterized in that** the viscosity, measured at 20°C using an MS Z3 DIN system at a rotational speed of 500 +/- 100 rpm, is between 50 and 1500 mPa.s, preferably 200 to 1100 mPa.s, for the component A and between 50 and 3000 mPa.s, preferably 150 to 1500 mPa.s, for the component B.

9. A process for implementing a composition as claimed in any one of claims 1 to 8, **characterized in that** the components A and B are injected using positive-displacement pumps or similar equipment that enable the injection to be performed while preserving the volumetric ratio between the various components in an anchoring hole via an injection tube or directly by a self-drilling or non-self-drilling anchoring bolt.

10. The implementing process as claimed in claim 9, wherein, in the case of the hollow anchoring bolt acting as an injection tube, it has an inlet and an outlet enabling the composition as defined in any one of claims 1 to 9 to migrate into the drilling hole in order to plug the annular space between this anchoring bolt and the ground.

11. The use of a composition as claimed in any one of claims 1 to 8, for an application for sealing dynamic anchoring bolts, in particular dynamic solid-shank anchoring bolts, dynamic hollow-shank anchoring bolts "Hollow Core Bolts", and long anchors of the bolt-cable type referred to as "Long Tendons".
